# EUROPÄISCHE PATENTSCHRIFT

(11) **EP 0 886 896 B1**
(45) Veröffentlichungstag und Bekanntmachung des Hinweises auf die Patenterteilung: **08.09.1999**
(21) Anmeldenummer: 97903239.8
(22) Anmeldetag: 08.02.1997
(51) Int. Cl.: H01S 3/03, H01S 3/081

(54) **BANDLEITERLASER**
STRIP LASER
LASER A RUBAN

(30) Priorität: 13.03.1996 DE 19609851
(43) Veröffentlichungstag der Anmeldung: 30.12.1998
(73) Patentinhaber: ROFIN-SINAR LASER GmbH, 22113 Hamburg (DE)
(72) Erfinder: ANIKITCHEV, Sergey, Toronto, Ontario M6B 1K1 (CA)
(74) Vertreter: Tergau & Pohl Patentanwälte
(86) Internationale Anmeldenummer: EP9700568
(87) Internationale Veröffentlichungsnummer: WO9734343

(56) Entgegenhaltungen:
- US-A- 5 353 297
- LASER UND OPTOELEKTRONIK, Bd. 23, Nr. 3, Juni 1991, STUTTGART DE, Seiten 68-71, XP000205579 R.NOWACK ET AL: "DIFFUSIONSGEKÜHLTE CO2-HOCHLEISTUNGSLASER IN KOMPAKTBAUWEISE"

## Beschreibung

Die Erfindung bezieht sich auf einen Bandleiterlaser.

Bandleiter- oder Slablaser sind beispielsweise aus der US-A-4,719,639 und der US-A-5,048,048 bekannt. Bei diesen Lasern wird zwischen zueinander parallelen ebenen Elektroden ein langgestreckter schmaler quaderförmiger Entladungsraum für ein Gas, insbesondere CO2, gebildet, das durch eine an die Elektroden angelegte Hochfrequenzspannung elektrisch angeregt wird. Gegenüber den rechteckigen Stirnflächen dieses Entladungsraumes sind zum Erzielen einer Laserwirkung Resonatorspiegel angeordnet. Diese Resonatorspiegel bilden einen Resonator nur in einer zu den Elektroden parallelen Ebene, d.h. in Richtung der Breite des Entladungsraumes. Quer dazu, d.h. in Richtung des Abstandes der Elektroden oder der Höhe des Entladungsraumes verhalten sich die beiden Elektroden als Wellenleiter.

In der US-A-4,719,639 wird näher ausgeführt, daß sowohl stabile als auch instabile Resonatoren geeignet sind. In der US-A-5,048,048 wird insbesondere ein instabiler konfokaler Resonator des negativen Zweiges vorgeschlagen.

Instabile Resonatoren haben dabei eine Reihe von Vorteilen, die insbesondere für Hochleistungslaser wichtig sind. So können beispielsweise mit instabilen Resonatoren auch in relativ kurzen Resonatoren hohe Modenvolumina und eine bessere Ausnutzung des gesamten Volumenbereichs des Entladungsraumes, d.h. des gesamten angeregten Gases, erzielt werden. Mit Hilfe von instabilen Resonatoren können somit kompakte Hochleistungslaser gebaut werden.

Instabile Resonatoren haben jedoch die Eigenschaft, daß die Intensitätsverteilung im Strahlquerschnitt des Laserstrahls im Nah- und Fernfeldbereich unterschiedlich ist und daß die Fernfeldverteilung außerdem in der Regel Nebenmaxima aufweist, die mit geeigneten Einrichtungen ausgefiltert werden müssen.

Der Erfindung liegt nun die Aufgabe zugrunde einen Bandleiterlaser anzugeben, bei dem eine hohe Strahlqualität und eine hohe Laserleistung bei insgesamt kompaktem Aufbau des Lasers einhergehen.

Die genannte Aufgabe wird gelöst mit den Merkmalen des Patentanspruches 1. Durch die Verwendung einer stabilen Multipass-Resonatoranordnung mit einer resonatorinternen Faltspiegelanordnung ist gewährleistet, daß einerseits der gesamte Entladungsraum ausgenutzt und daß andererseits die mit der Verwendung eines stabilen Resonators einhergehenden vorteilhaften Eigenschaften des Laserstrahls, insbesondere eine von der Enffernung vom Strahlaustrittsfenster nahezu unabhängige Intensitätsverteilung über dem Strahlquerschnitt sowie das Fehlen von störenden Nebenmaximas, erzielt werden.

Weitere vorteilhafte Ausgestaltungen der Erfindung ergeben sich gemäß der Unteransprüche.

Zur weiteren Erläuterung der Erfindung wird auf die Ausführungsbeispiele der Zeichnung verwiesen, in deren

FIG 1 und FIG 2 ein Bandleiterlaser gemäß der Erfindung schematisch in einer Draufsicht bzw. einer Seitenansicht veranschaulicht ist.

FIG 3 zeigt eine besonders vorteilhafte Ausgestaltung eines Bandleiterlasers gemäß der Erfindung in einer Draufsicht.

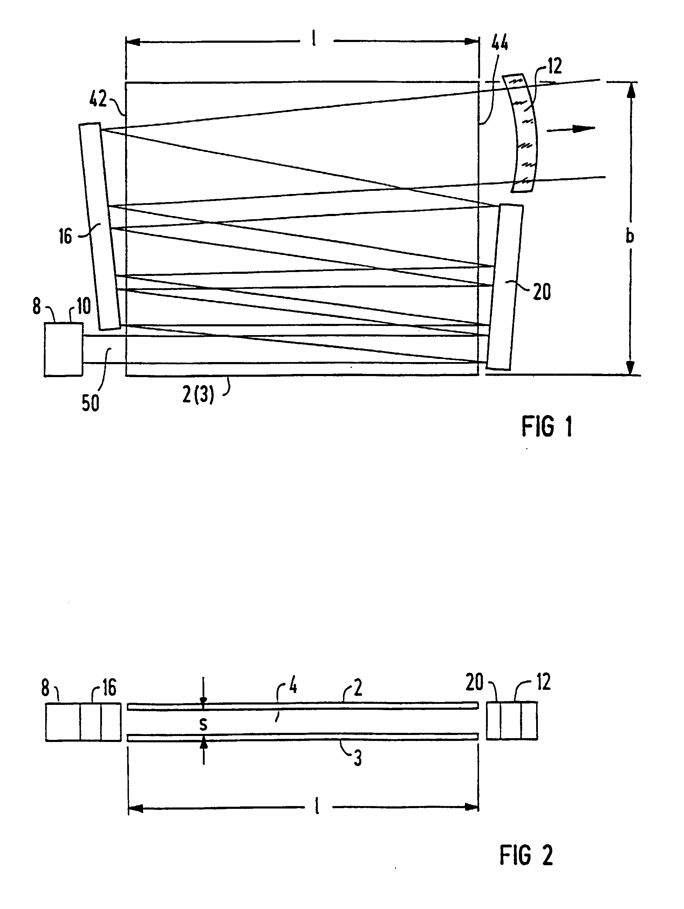

Gemäß Figuren 1 und 2 enthält ein Bandleiterlaser zwei ebene plattenförmige Elektroden 2 und 3, die parallel zueinander angeordnet und durch einen Spalt s beabstandet sind. Zwischen diesen beiden Elektroden 2 und 3 befindet sich ein Lasergas, insbesondere eine CO2 enthaltende Gasmischung, das durch eine an die Elektroden 2 und 3 angelegte Hochfrequenzspannung angeregt (gepumpt) wird. Die Elektroden 2 und 3 legen einen quaderförmigen Entladungsraum 4 mit einer Länge I, beispielsweise 500 cm bis 1000 cm, einer Breite und einer dem Abstand der Elektroden entsprechenden Höhe s fest. Der Abstand s ist im Bereich von wenigen Millimetern und ist deutlich kleiner als die Breite b, die mehrere Zentimeter, beispielsweise 20 cm, betragen kann.

Der Entladungsraum 4 weist senkrecht zu seiner Längsrichtung orientierte Stirnflächen 42 und 44 auf, die einen rechteckigen Querschnitt mit der Breite b und der Höhe s haben: Gegenüber diesen Stirnflächen 42 und 44 sind Spiegel 8, 16 bzw. 12, 20 angeordnet, die einen stabilen ebenen Multipass-Resonator parallel zu den von den Elektroden 2 und 3 aufgespannten Ebenen bilden. Der Multipass-Resonator besteht im Ausführungsbeispiel aus einem Endspiegel 8 und einem Endspiegel 12 sowie aus einer resonatorinternen Faltspiegelanordnung, die im Ausführungsbeispiel aus zwei zu den Stirnflächen 42 und 44 geneigten Faltspiegeln 16 und 20 mit ebenen Spiegelflächen 18 bzw. 22, besteht, wobei jeder Stirnfläche 42 bzw. 44 ein Faltspiegel 16 bzw. 20 zugeordnet ist. Der Endspiegel 8 besitzt einen hohen Reflexionsgrad (nahe 100 %) und dient als Rückspiegel und ist ebenfalls ein Planspiegel mit ebener Spiegelfläche 10. Der Endspiegel 12 ist teildurchlässig beschichtet und dient als Auskoppelspiegel und ist ein in Richtung zum Entladungsraum 4 konkav gekrümmter sphärischer oder mit seiner Zylinderachse senkrecht zu den Elektroden 2 bzw. 3 angeordneter Zylinderspiegel. Sein Reflexionsgrad R ist so gewählt, daß ein maximaler Wirkungsgrad erreicht wird, und beträgt beispielsweise zwischen 60 % und 80 %. Anstelle eines planen Endspiegels 8 zum Rückspiegeln und eines konkaven Endspiegels 12 zum Auskoppeln können auch ein konkav gekrümmter Rückspiegel und ein planer Auskoppelspiegel oder zwei konkave Endspiegel verwendet werden.
Die Spiegelkrümmungen der Endspiegel 8 und 10 werden dabei so gewählt, daß ein stabiler Resonator entsteht.

Die Ausbreitungsbedingungen parallel zur Breite b der Stirnflächen 42 und 44 werden durch die der freien Strahlausbreitung zugrundeliegenden Gesetzmäßigkeiten bestimmt. Nur in der von dieser Richtung und der von der Längsrichtung I der Elektroden 2 und 3 aufgespannten Ebene liegt ein stabiler Multipass-Resonator vor. Senkrecht zu den Elektroden 2 und 3 wird die Stahlausbreitung im Innern des Bandleiterlasers im wesentlichen durch die Wellenleitereigenschaften des durch die Elektroden 2 und 3 gebildeten schmalen Entladungsraumes 4 bestimmt.

Durch die einander gegenüberliegenden Faltspiegel 16 und 20 werden mehrere jeweils zueinander seitlich versetzte resonatorinterne Durchläufe eines sich im Inneren des Resonators ausbreitenden Strahls 50 erzwungen. Durch diese Faltspiegelanordnung wird somit einerseits bewirkt, daß das gesamte Volumen des Entladungsraumes für die optische Verstärkung ausgenutzt wird. Andererseits bewirkt die Faltspiegelanordnung auch eine Erhöhung der effektiven Länge des Resonators, die sich vorteilhaft auf die Frequenzreinheit und die Frequenzstabilität des Ausgangsstrahls auswirkt. Anstelle der in der Figur dargestellten einfachen Ausführungsform mit zwei Faltspiegeln 16 und 20 sind auch Ausführungsformen denkbar, die mehr als zwei Faltspiegel enthalten.

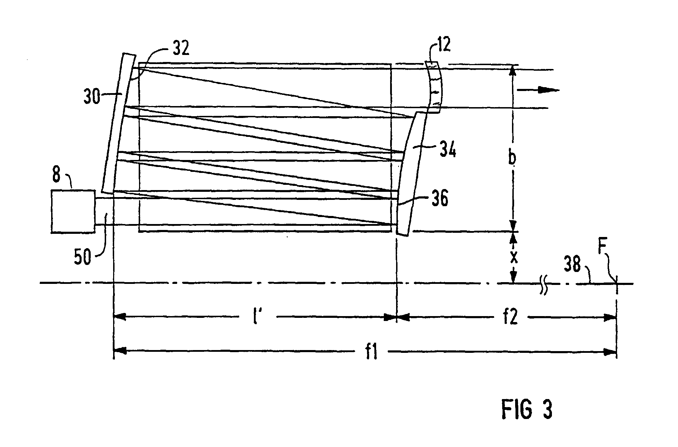

Gemäß Figur 3 ist eine teleskopische Faltspiegelanordnung vorgesehen, die aus einem Faltspiegel 30 mit einer zum Entladungsraum 4 hin konkav gekrümmten Spiegelfläche 32 und aus einem Faltspiegel 34 mit einer zum Entladungsraum 4 konvex gekrümmten Spiegelfläche 36 besteht. Die beiden Faltspiegel 30 und 34 bilden ein astigmatisches teleskopisches Abbildungssystem, dessen optische Achse 38 außerhalb des Entladungsraumes parallel zur Längsrichtung der Elektroden angeordnet ist. Der Vorteil einer solchen teleskopischen Faltung besteht darin, daß ein kleiner Strahlquerschnitt entsprechend einer niedrigen Fresnelzahl mit wenigen Durchläufen und entsprechend geringen Verlusten aufgeweitet wird und somit ein relativ großer Strahlquerschnitt zur Verfügung steht, mit dem eine geringe Belastung der Transmissionsoptik einhergeht.

Die teleskopische Faltspiegelanordnung 30, 34 entspricht einem instabilen konfokalen off-axis Resonator des positiven Zweigs. Die gesamte Spiegelanordnung bildet einen stabilen Resonator mit resonatorinternem Teleskop. In einem typischen Ausführungsbeispiel mit einer Breite a1 ≈ 1,7 cm für den Endspiegel 8 und, einer Breite a2 ≈ 4,4 cm für den Endspiegel 12, einem Abstand I' ≈ 100 cm der Spiegel 30 und 34 an der optischen Achse 38, einem Abstand x = 10 cm von der optischen Achse 38, einer Breite b = 20 cm des Entladungsraumes 4, einer Brennweite des Faltspiegels 30 f1 ≈ 688 cm und einem Brennpunkt des Faltspiegels 34 von f2 ≈ 588 cm (konfokale Anordnung, Brennpunkt F außerhalb des Resonators seitlich vom Faltspiegel 34) ergeben sich 6 Umläufe des Strahls 50 und eine Fresnelzahl Nf = 1,2 in Richtung der Breite b, d. h. ein ,,Single-Mode-Betrieb" in Richtung dieser Breite b und in eine Richtung senkrecht zu den Elektrodenflächen, sowie ein axialer Modenabstand von etwa 25 MHz. Mit einem solchen Bandleiterlaser wird ein frequenzstabiler Laserstrahl erzeugt, der in beiden Richtungen eine gaußähnliche Intensitätsverteilung aufweist.

## Patentansprüche

1. Bandleiterlaser mit einem Entladungsraum (4), der sich zwischen zwei ebenen Elektroden (2, 3) befindet und dessen senkrecht zur Längsrichtung (I) des Entladungsraumes orientierten Stirnflächen (42, 44) ein ebener und bezogen auf die Breite (b) des Entladungsraumes (4) stabiler Multipass-Resonator (8, 12, 16, 20; 8. 12, 30. 34) mit einer resonatorinternen Faltspiegelanordnung (16, 20; 30. 34) zugeordnet ist.

2. Bandleiterlaser nach Anspruch 1, bei dem eine teleskopische Faltspiegelanordnung (30, 34) vorgesehen ist.

3. Bandleiterlaser nach Anspruch 2, bei dem die optische Achse (38) der teleskopischen Faltspiegelanordnung (30, 34) außerhalb des Entladungsraumes (4) verläuft.

4. Bandleiterlaser nach Anspruch 3, bei der die teleskopische Faltspiegelanordnung (30, 34) einen einer Stirnfläche (44) zugeordneten Spiegel (34) mit einer zum Entladungsraum (4) konvex gekrümmten Spiegelfläche (36) und einen der anderen Stirnfläche (42) zugewandten Spiegel (34) mit einer zum Entladungsraum (4) konkav gekrümmten Spiegelfläche (36) enthält.

## Claims

1. Stripline laser with a discharge space (4) which is located between two planar electrodes (2, 3) and whose end faces (42, 44), oriented perpendicular to the longitudinal direction (l) of the discharge space are assigned a planar multipass resonator (8, 12, 16, 20; 8, 12, 30, 34) which is stable in relation to the width (b) of the discharge space (4) and has an inresonator folding mirror arrangement (16, 20; 30, 34).

2. Stripline laser according to Claim 1, in which a telescopic folding mirror arrangement (30, 34) is provided.

3. Stripline laser according to Claim 2, in which the optical axis (38) of the telescopic folding mirror arrangement (30, 34) extends outside the discharge space (4).

4. Stripline laser according to Claim 3, in which the telescopic folding mirror arrangement (30, 34) contains a mirror (34) which is assigned to one end face (44) and has a mirror face (36) convexly curved towards the discharge space (4), and a mirror (34) which faces the other end face (42) and has a mirror face (36) concavely curved towards the discharge space (4).

## Revendications

1. Laser à ruban équipé d'une chambre de décharge (4), qui se trouve entre deux électrodes planes (2,3) et dont les surfaces frontales (42, 44) orientées perpendiculairement à la direction longitudinale (l) de la chambre de décharge forment un résonateur à passages multiples stable, plan (8, 12, 16, 20 ; 8, 12, 30, 34) et rapporté à la largeur (b) de la chambre de décharge (4) associé à un dispositif de miroir replié interne au résonateur (16, 20 ; 30, 34).

2. Laser à ruban selon la revendication 1, dans lequel est prévu un dispositif de miroir replié télescopique (30, 34).

3. Laser à ruban selon la revendication 2, dans lequel l'axe optique (38) du dispositif de miroir replié télescopique (30, 34) s'étend à l'extérieur de la chambre de décharge (4).

4. Laser à ruban selon la revendication 3, dans lequel le dispositif de miroir replié télescopique (30, 34) comporte un miroir (34) associé à une surface frontale (44) avec une surface de miroir (36) à courbure convexe tournée vers la chambre de décharge (4) et un miroir (34) tourné vers l'autre surface frontale (42) avec une surface de miroir (36) à courbure concave tournée vers la chambre de décharge (4).
